# EUROPÄISCHE PATENTSCHRIFT

(11) **EP 0 626 204 B1**
(45) Veröffentlichungstag und Bekanntmachung des Hinweises auf die Patenterteilung: **23.09.1998**
(21) Anmeldenummer: 94107903.0
(22) Anmeldetag: 21.05.1994
(51) Int. Cl.: B02C 18/14, B02C 18/22, B02C 21/02

(54) **Vorrichtung zum Zerkleinern von organischen Stoffen**
Apparatus for comminuting organic material
Dispositif de broyage pour matières organiques

(30) Priorität: 26.05.1993 DE 4317509
(43) Veröffentlichungstag der Anmeldung: 30.11.1994
(73) Patentinhaber: Gaiser, Martin-Ulrich, D-76744 Wörth (DE)
(72) Erfinder: Gaiser, Martin-Ulrich, D-76744 Wörth/Rhein (DE); Künne, Bernd, Dr.-Ing., D-59505 Bad Sassendorf (DE)
(74) Vertreter: Fritz, Edmund Lothar, Dipl.-Chem.

(56) Entgegenhaltungen:
- DE-A- 3 444 059
- DE-A- 3 522 615
- DE-A- 3 631 337
- GB-A- 973 993
- US-A- 3 874 605
- US-A- 4 377 261

## Beschreibung

Die Erfindung bezieht sich auf eine Vorrichtung zum Zerkleinern von organischen Stoffen mit den Merkmalen nach dem Oberbegriff des Anspruchs 1.

Bekannt ist (US PS 4,377,261) eine stationäre Zerkleinerungsvorrichtung speziell für Kunststoff, die dem Oberbegriff des Anspruchs 1 entspricht.

Bekannt ist außerdem (DE-A 34 44 059) ein fahrbares Gerät zum Aufnehmen und Zerkleinern von Astholz, Strauchwerk und dergleichen. Die Aufnahmevorrichtung besteht dabei in einer ersten Ausführung aus einem durch hydraulisch steuerbare Schwingen und Zinken gebildeten Rechen und in einer zweiten Ausführung aus einem rotierenden Walze mit radialen Aufnahmeelementen, der bzw. die das auf dem Boden oder in einem Sondercontainer liegende Gut in den Bereich eines Einzugsschachtes fördert.

Der Erfindung liegt die Aufgabe zugrunde eine Vorrichtung zum Zerkleinern von organischen Stoffen als fahrbares Gerät zur Aufnahme von Laub, Heckenschnitt und sonstige Gartenabfällen gegenüber dem vorgenannten Stand der Technik vereinfacht auszubilden.

Die Lösung dieser Aufgabe ergibt sich durch eine Vorrichtung mit Merkmale des Anspruchs 1. Die Unteransprüche haben weitere Ausgestaltungen und bevorzugte Ausführungsformen dieser Lösung zum Inhalt. Wesentlich ist bei der erfindungsgemäßen Lösung, daß das Gut vom Boden unmittelbar durch radiale Aufnahmeelemente einer rotierenden Walze genommen und ohne weitere Fördermittel über einen Kanal nach oben über die Dosiereinrichtung geführt wird von wo es durch Eigengewicht in den Zerkleinerungsmechanismus abfällt.

Das gesamte Gerät ist auf einem Fahrzeug angeordnet oder in Form eines Zusatzgerätes gestaltet, das an ein Fahrzeug angebaut werden kann. Besonders vorteilhaft ist die Ausführung als Gerät zum Aufsammeln, Zerkleinern und wieder Ausstreuen von Laub und ähnlichen Materialien, die sich auf Rasenflächen, befestigten Plätzen oder dergleichen befinden. Darüber hinaus ist es sinnvoll durch eine zusätzliche Öffnung Materialien von Hand zuführen zu können, so daß das Gerät auch als stationärer Gartenhäcksler verwendet werden kann.

Im folgenden werden Ausführungsbeispiele der Erfindung unter Bezugnahme auf die beiliegenden Zeichnungen beschrieben.

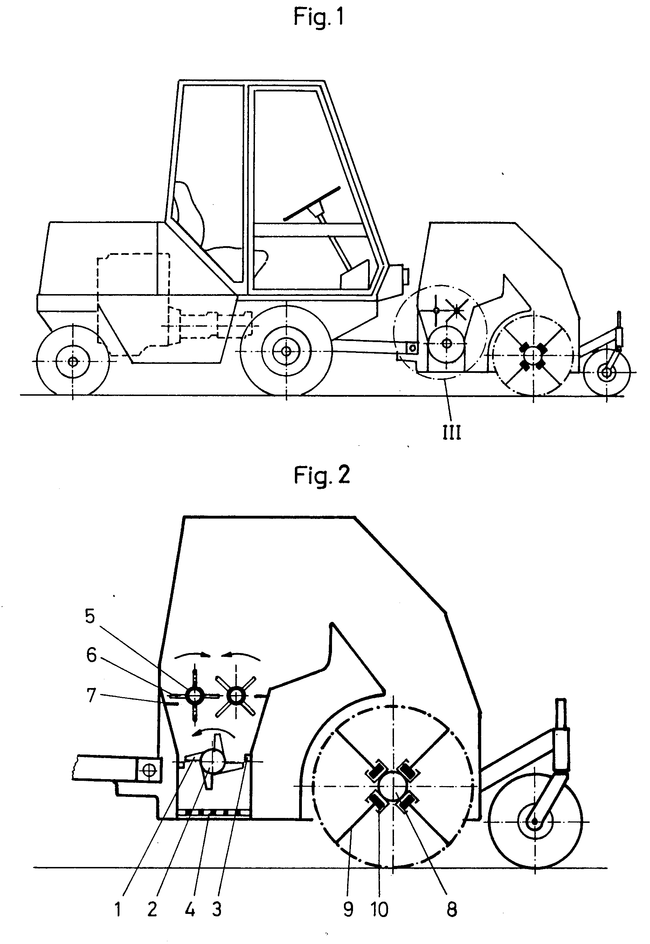

- Fig. 1: zeigt eine Zerkleinerungsvorrichtung nach der Erfindung an einem Fahrzeug beim Gebrauch;
- Fig. 2: stellt im Prinzip diese Zerkleinerungsvorrichtung im Schnitt dar;
- Fig. 3: zeigt an einem weiteren Ausführungsbeispiel Einzelheiten einer Zerkleinerungsvorrichtung nach der Erfindung im Schnitt;
- Fig. 4: zeigt im Prinzip die Antriebselemente der Dosiereinrichtung.

Die Zerkleinerungsvorrichtung besitzt tangential angeordnete Elemente 1, wie Schlagleisten, Messer oder ähnliches, die auf einem rotierenden Element 2 (Trommel) befestigt sind. Die tangentialen Elemente werden an feststehenden Gegenschneiden 3 vorbeigeführt, wodurch das Gut zerkleinert wird. Am Auslaß der Zerkleinerungsvorrichtung befindet sich ein Gitter 4, dessen Querschnitt einstellbar ist. Da nur solche Partikel durchgelassen werden, die durch dieses Gitter passen, kann durch Verstellen des Querschnitts der Öffnung des Gitters der Zerkleinerungsgrad eingestellt werden. Diese Verstellung könnte beispielsweise dadurch erfolgen, daß zwei Lochbleche gegeneinander verschoben werden.

Um der Zerkleinerungsvorrichtung einerseits nicht zuviel Gut zuzuführen, was zum Verstopfen führen kann, und um andererseits das Gut in die Zerkleinerungsvorrichtung hineinpressen zu können, ist eine Dosiereinrichtung vorgeschaltet, wobei der Volumenstrom, den die Dosiereinrichtung zuführt, eingestellt werden kann. Diese Dosiereinrichtung kann beispielsweise aus zwei parallelen Welle 5 bestehen, die gegenläufig angetrieben werden. Auf diesen Wellen sind radiale Elemente 6, beispielsweise Flachstahlabschnitte, angeordnet, die senkrecht zu den Wellenachsen betrachtet in der gleichen Ebene sitzen. Werden mehrere Sätze solcher radialer Elemente entlang beiden Wellen angeordnet, so können zwischen diesen Sätzen Zwischenräume verbleiben. In diesen Zwischenräumen können feststehende Elemente 7 angeordnet werden, die das Gut abstreifen. Durch die Änderung der Drehzahl der beiden Wellen kann der Volumenstrom eingestellt werden.

Zum Aufsammeln des Gutes dient eine rotierende Walze 8, auf der radiale Aufnahmeelemente 9 angeordnet sind. Diese Aufnahmeelemente können beispielsweise Stahlfedern, Borsten oder ähnliches sein, wobei die Art der Aufnahmeelemente anhängig vom aufzunehmenden Gut und von der Beschaffenheit des Untergrundes gewählt werden sollte. Besonders vorteilhaft ist es, die Aufnahmeelemente auf axialen Schienen anzuordnen, die in die Walze 8 axial eingeschoben und somit ausgetauscht werden können.

Weiterhin ist es sinnvoll, das Gerät mit einer zusätzlichen Einrichtung zu versehen, die es ermöglicht, das zerkleinerte Gut anstelle des Ausstreuens in geeignete Behälter, z.B. Säcke, abzufüllen.

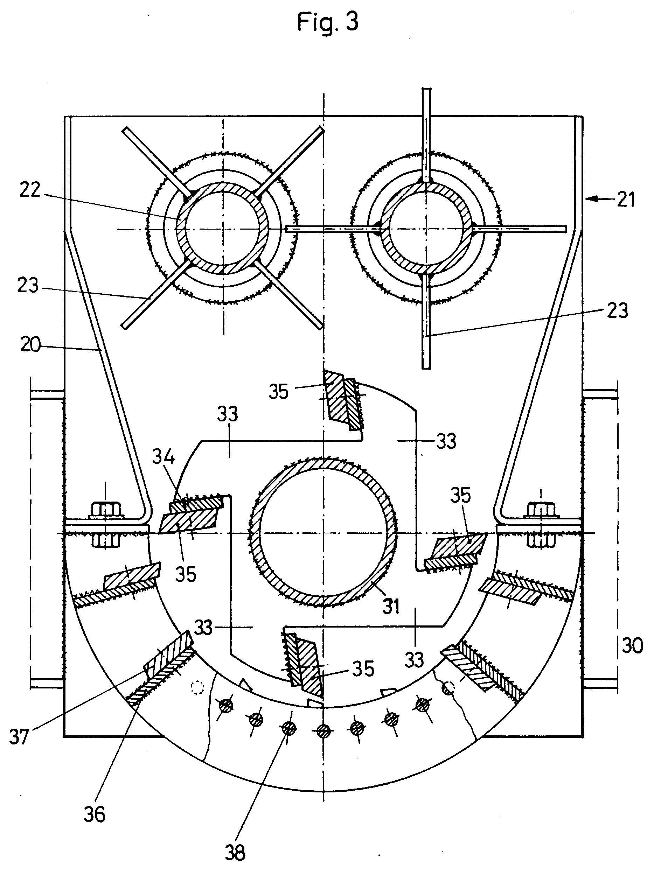

Bei dem Ausführungsbeispiel nach Figur 3 ist oben in einem Gehäuse 20 die Dosiereinrichtung 21 untergebracht und unten die Zerkleinerungseinrichtung 30. Das Gut wird oben zugeführt und kann unten aus dem offenen Gehäuse zerkleinert herausfallen.

Die Dosiereinrichtung besteht aus zwei Dosierwellen 22, an denen jeweils radiale Flachstäbe 23 angeschweißt sind. Die Dosierung erfolgt durch mehr oder weniger schnelles Drehen der Wellen, gegenläufig, wobei mehr oder weniger Gut zwischen den Flachstäben 23 aufgenommen und herunterfallen kann.

Bei der Zerkleinerungsvorrichtung 30 ist mittig eine angetriebene Trommel 31 vorgesehen, mit mehreren Scheiben, an denen jeweils Arme 33 gebildet sind, etwa in tangentialer Anordnung zur Trommel. An den Armen sind über die gesamte Trommellänge durchgehende Messerhalter 34 fest angebracht und an den Messerhaltern sind auswechselbare Stabmesser 35 befestigt.

Unten, wo das Gehäuse offen ist und eine Halbkreisform hat, sind fest in radialer Anordnung Rippen vorgesehen, an denen auswechselbar Schlagleisten 37 gehalten sind. Während sich die Trommel dreht, wird das herunterfallende Gut zwischen den Stabmessern 35 und den Schlagleisten 37 zerkleinert und fällt durch einen aus Gitterstäben 38 gebildeten Rost. Durch die Abstände der Gitterstäbe 38 wird die Größe des herabfallenden Gutes bestimmt.

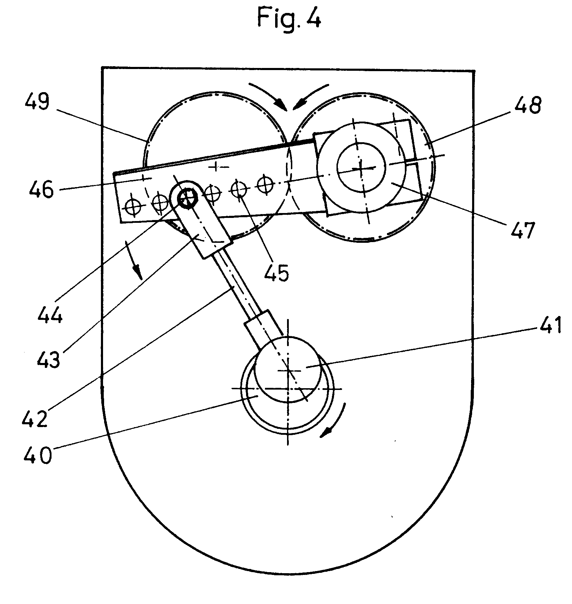

Im folgenden wird auf Fig. 4 Bezug genommen. Die parallelen Wellen der Dosiereinrichtung sind durch miteinander kämmende Zahnräder 48, 49 getrieblich derart verbunden, das sie sich gleichmäßig im Gegensinne drehen. Die Drehung erfolgt abschnittsweise in größeren oder kleineren Sektoren, so daß bei jeder Drehbewegung eine größere oder kleinere Charge an Gut zugeführt wird. Das Zahnrad 48 ist über einen Freilauf 47 mit einem radialen Hebel 46 verbunden, der mit der Trommelwelle 40 (Hächslerwelle) derart verbunden ist, daß er sich auf und ab bewegt. Bei der Abwärtsbewegung werden die beiden Zahnräder 48, 49 zu einer sektorenweise Drehung veranlaßt, bei der Aufwärtsbewegung stehen sie still. Der Hebel 46 ist über eine Zugstange 42 und eine Exenterbuchse 41 mit der Trommelwelle 40 verbunden. Über einen Gelenkkopf 43 und einen Gelenkbolzen 44 ist die Zugstange 42 mit dem Hebel 46 verbunden. Für die Gelenkverbindung stehen am Hebel mehrere Bolzenlager 45 zur Verfügung, so daß der jeweilige Hebelarm und damit die Größe der Drehbewegung der Zahnräder einstellbar ist. Auf diese Weise läßt sich auch die Chargenmenge einstellen.

## Patentansprüche

1. Vorrichtung zum Zerkleinern von organischen Stoffen mit den Merkmalen
- in einem Gehäuse ist oben zur Aufnahme des Gutes eine Dosiereinrichtung (5) untergebracht, bestehend aus zwei parallelen gegenläufig angetriebenen Wellen mit radialen Elementen (6);
- im unteren Bereich des Gehäuses ist eine Zerkleinerungseinrichtung untergebracht, bestehend aus einer rotierenden Trommel (2, 31) mit etwa tangential angeordneten Zerkleinerungselementen (1, 35), denen feststehende Gegenschneiden (3, 37) zugeordnet sind
gekennzeichnet durch die weiteren Merkmale:
zwecks Aufnahme und Zerkleinerung von Laub, Heckenschnitt und sonstigen Gartenabfällen ist das Gehäuse auf einem Fahrzeug oder Anhänger untergebracht und mit einem Gerät kombiniert, bestehend aus einer rotierenden Walze (8), auf der radiale Aufnahmeelemente (9) angebracht sind, um das Gut von Rasenflächen aufzunehmen und der Dosiereinrichtung zuzuführen.

2. Vorrichtung nach Anspruch 1, dadurch gekennzeichnet, daß unter der Zerkleinerungsvorrichtung ein einstellbares Gitter (4) vorgesehen ist.

3. Vorrichtung nach Anspruch 1, dadurch gekennzeichnet, daß bei der Dosiereinrichtung in den radialen Elementen (6) Freiräume gebildet sind und daß diesen Räumen feststehende, das aufgenommene Gut abstreifende Elemente zugeordnet sind.

4. Vorrichtung nach Anspruch 1, dadurch gekennzeichnet, daß die radialen Aufnahmeelemente auf axialen Schienen (10) austauschbar angeordnet sind.

5. Vorrichtung nach Anspruch 1, dadurch gekennzeichnet, daß die radialen Elemente zum Vertikutieren von Rasen ausgebildet und angeordnet sind.

6. Vorrichtung nach Anspruch 1, dadurch gekennzeichnet, daß in einem unteren offenen Bereich des Gehäuses (20) Schlagleisten (37) radial übereinander über einen Halbkreis verteilt angeordnet sind.

7. Vorrichtung nach Anspruch 6, gekennzeichnet durch einen durch auswechselbare Gitterstäbe (38) gebildeten Rost.

8. Vorrichtung nach Anspruch 1, gekennzeichnet durch die nachfolgend genannten Merkmale:
- Die parallelen Wellen der Dosiereinrichtung sind durch miteinander kämmende Zahnräder (48, 49) verbunden.
- Ein Zahnrad (48) ist über einen Freilauf (47) mit einem radialen Hebel (46) verbunden, derart, daß er bei einer Schwenkbewegung nach unten eine Drehung der Zahnräder veranlaßt, während der Schwenkbewegung nach oben die Zahnräder stillstehen.
- Der Hebel (46) ist durch eine Zugstange (42) und eine Exenterbuchse (41) mit der Trommelwelle (40) verbunden.
- Am Hebel sind für die Gelenkverbindung mit der Zugstange mehrere Bolzenlager (45) vorgesehen.

## Claims

1. Apparatus for comminuting organic material having the characteristics
- in a housing there is provided at the top thereof a dosing device (5) for receiving the material, the dosing device consisting of two parallel shafts driven in a countercurrent manner and having radial elements (6);
- in the lower region of the housing there is provided a crushing device consisting of a rotating drum (2, 31) with crushing elements (1, 35) arranged approximately tangentially and associated with stationary counter cutting edges (3, 37),
characterised by the following further features:
for the purpose of receiving and comminuting leaves, hedge cuttings and other garden wastes, the housing is located on a vehicle or on a trailer and combined with a device consisting of a roller (8) on which radial pick-up elements (9) are provided for the purpose of picking up the material from grass-plots and feeding it to the dosing device.

2. Apparatus as claimed in claim 1, characterised in that an adjustable grid (4) is provided underneath the crushing device.

3. Apparatus as claimed in claim 1, characterised in that the dosing device comprises in its radial elements (6) free spaces, stationary elements wiping off the picked up material being associated with these spaces.

4. Apparatus as claimed in claim 1, characterised in that the radial pick-up elements are arranged on axial rails (10) in an exchangeable manner.

5. Apparatus as claimed in claim 1, characterised in that the radial elements are designed and arranged for the purpose of aerating and scarifying grass-plots.

6. Apparatus as claimed in claim 1, characterised in that in a lower open region of the housing (20) there are arranged beating blades (37) radially above each other and distributed over a semicircle.

7. Apparatus as claimed in claim 6, characterised in that the grid is formed by exchangeable lattice bars.

8. Apparatus as claimed in claim 1, characterised by the following characteristics:
- The parallel shafts of the dosing device are connected by means of intermeshing gear wheels (48, 49).
- One gear wheel (48) is connected to a radial lever (46) by means of a free-wheel in such a manner that it causes a rotation of the gear wheels in the case of a downwardly directed pivot movement, whereas in the case of an upwardly directed pivot movement the gear wheels are standing still.
- The lever (46) is connected to the drum shaft (40) by means of a pull rod (42) and an eccentric bushing (41).
- At the lever there are provided several hinged supports (45) for the hinge connection to the pull rod.

## Revendications

1. Dispositif de broyage pour matières organiques présentant les caractéristiques suivantes:
- dans le haut d'un boîtier est disposé, pour la réception des matières, une installation de dosage (5), composée de deux arbres parallèles entraînés en sens contraire et dotés d'éléments radiaux (6);
- dans la région inférieure du boîtier est disposée une installation de broyage, constituée par un tambour rotatif (2, 31) avec des éléments de broyage (1, 35) montés sensiblement tangentiellement, auxquels sont associés des lames antagonistes fixes (3, 37), dispositif caractérisé en outre:
en ce qu'aux fins de la réception et du broyage de feuilles mortes, de débris de haies et d'autres déchets de jardin, le boîtier est monté dans un véhicule ou dans une remorque et est combiné avec un engin constitué d'un cylindre rotatif (8) sur lequel sont prévus des éléments de ramassage (9) pour ramasser les matières situées sur les surfaces de gazon et pour les alimenter à l'installation de dosage.

2. Dispositif suivant la revendication 1, caractérisé en ce qu'au-dessous de l'installation de broyage est prévue une grille réglable (4).

3. Dispositif suivant la revendication 3, caractérisé en ce qu'au sein de l'installation de dosage, des cavités libres sont prévues dans les éléments radiaux (6), cavités auxquelles sont associés des éléments fixes servant à détacher par raclage les matières reçues.

4. Dispositif suivant la revendication 1, caractérisé en ce que les éléments récepteurs radiaux sont disposés de manière interchangeable sur des rails axiaux (10).

5. Dispositif suivant la revendication 1, caractérisé en ce que les éléments radiaux sont conçus et disposés pour permettre de creuser des sillons dans le gazon.

6. Dispositif suivant la revendication 1, caractérisé en ce que dans une zone intérieure ouverte du boîtier sont disposées des lattes de battage (37) radialement les unes au-dessus des autres et distribuées le long d'un demi-cercle.

7. Dispositif suivant la revendication 6, caractérisé par la présence d'une grille constituée par des barreaux (38) interchangeables.

8. Dispositif suivant la revendication 1, caractérisé par les caractéristiques ci-après énumérées:
- les arbres parallèles de l'installation de dosage sont reliés par des roues dentées (48, 49) en engrènement;
- une roue dentée (48) est par l'intermédiaire d'un mécanisme à roue libre (47) reliée à un levier radial (46) de manière telle que lors d'un mouvement de pivotement vers le bas, le levier produit une rotation des roues dentées, tandis que lors d'un mouvement de pivotement vers le haut du levier, les roues dentées restent à l'arrêt;
- le levier (46) est par l'intermédiaire d'une tige de traction (42) et d'une douille d'excentrique (41) relié à l'arbre (40) du tambour;
- aux fins de la liaison articulée avec la tige de traction, le levier présente plusieurs paliers pour boulons (45).
